# EUROPEAN PATENT APPLICATION

(11) **EP 4 611 405 A1**
(43) Date of publication of application: **03.09.2025**
(21) Application number: 22963059.5
(22) Date of filing: 26.10.2022
(51) Int. Cl.: H04W 4/06

(54) **COMMUNICATION METHOD, APPARATUS AND SYSTEM**

(71) Applicant: Beijing Xiaomi Mobile Software Co., Ltd., Beijing 100085 (CN)
(72) Inventor: WU, Jinhua, Beijing 100085 (CN)
(74) Representative: Dehns Germany Partnerschaft mbB
(86) International application number: PCT/CN2022/127797
(87) International publication number: WO 2024/087075

(57) **Abstract**

The present disclosure relates to a communication method, apparatus and system. The method comprises: a proxy device obtains multicast broadcast service (MBS) content by means of a first communication network, and sends the MBS content to a terminal device by means of a second communication network, wherein the first communication network may be a network that supports an MBS, and the second communication network may be a network that does not support the MBS. In this way, an MBS can be provided for a terminal device in a second communication network by means of a proxy device.

## Description

### TECHNICAL FIELD

The present disclosure relates to the field of communication technologies, and in particular, to a method for communication, an apparatus, and a system.

### BACKGROUND

In a wireless system for communication, in order to provide better multimedia applications, the multicast broadcast service (MBS) is introduced in the 3GPP (3rd Generation Partnership Project). The MBS is a service for sending data from one data source to a plurality of recipients. Among them, the MBS service includes an MBS multicast service and an MBS broadcast service. The MBS multicast service refers to sending data from one data source to a plurality of users. The MBS broadcast service refers to sending data from one data source to all users in the service domain of the MBS broadcast service.

In the related art, an MBS in the 3GPP communication network (for example, a 4G or 5G network) is defined in the 3GPP, however, the non-3GPP terminal cannot currently use the MBS.

### SUMMARY

In order to overcome the above-mentioned problems in the related art, the present disclosure provides a method for communication, an apparatus and a system.

According to a first aspect of the embodiments of the present disclosure, there is provided a method for communication, the method is applied to a proxy device, and the method includes:
obtaining a multicast broadcast service (MBS) content through a first communication network; and
sending the MBS content to a terminal device through a second communication network;
where the first communication network is a network that supports an MBS, and the second communication network is a network that does not support the MBS.

According to a second aspect of the embodiments of the present disclosure, there is provided a method for communication, the method is applied to a terminal device, and the method includes:
receiving, through a second communication network, a multicast broadcast service (MBS) content sent by a proxy device, where the MBS content is obtained by the proxy device through a first communication network, the first communication network is a network that supports an MBS, and the second communication network is a network that does not support the MBS.

According to a third aspect of the embodiments of the present disclosure, there is provided a method for communication, the method is applied to a first entity in a first communication network, the first entity is configured to provide a multicast broadcast service (MBS) content for the first communication network, and the method includes:
sending the MBS content to a proxy device through the first communication network, where the MBS content is used to indicate the proxy device to send the MBS content to a terminal device through a second communication network, the first communication network is a network that supports an MBS, and the second communication network is a network that does not support the MBS.

According to a fourth aspect of the embodiments of the present disclosure, there is provided a method for communication, the method is applied to a second entity in a first communication network, the second entity is configured to provide a network exposure function corresponding to an MBS service, the first communication network further includes a first entity, the first entity is configured to provide a multicast broadcast service (MBS) content for the first communication network, and the method includes:
receiving an MBS session establishment request message sent by the first entity, where the MBS session establishment request message includes a third indication parameter, and the third indication parameter is used to indicate that the established MBS session is a session that supports sending the MBS content to a second communication network; and
sending an MBS session establishment response message to the first entity in a case that the MBS session is established successfully according to the third indication parameter.

According to a fifth aspect of the embodiments of the present disclosure, there is provided a method for communication, the method is applied to a first core network device in a first communication network, and the method includes:
sending a multicast broadcast service (MBS) content to a proxy device through the first communication network, where the MBS content is used to indicate the proxy device to send the MBS content to a terminal device through a second communication network, the first communication network is a network that supports an MBS, and the second communication network is a network that does not support the MBS.

According to a sixth aspect of the embodiments of the present disclosure, there is provided a method for communication, the method is applied to a second core network device in a first communication network, and the method includes:
receiving, through the first communication network, a session modification request message sent by a proxy device, where the session modification request message includes a second indication parameter and an MBS session identifier of a target MBS session, and the second indication parameter is used to indicate that the proxy device provides an MBS content corresponding to the target MBS session to a terminal device through a second communication network; and
sending a session modification command to the proxy device through the first communication network in a case of determining, according to the second indication parameter and the MBS session identifier, that the target MBS session is a session that supports sending the MBS content to the second communication network, where the session modification command is used to indicate the proxy device to join the target MBS session.

According to a seventh aspect of the embodiments of the present disclosure, there is provided an apparatus for communication, the apparatus is applied to a proxy device, and the apparatus includes:
a first obtaining module, configured to obtain a multicast broadcast service (MBS) content through a first communication network; and
a first sending module, configured to send the MBS content to a terminal device through a second communication network;
where the first communication network is a network that supports an MBS, and the second communication network is a network that does not support the MBS.

According to an eighth aspect of the embodiments of the present disclosure, there is provided an apparatus for communication, the apparatus is applied to a terminal device, and the apparatus includes:
a second receiving module, configured to receive, through a second communication network, a multicast broadcast service (MBS) content sent by a proxy device, where the MBS content is obtained by the proxy device through a first communication network, the first communication network is a network that supports an MBS, and the second communication network is a network that does not support the MBS.

According to a ninth aspect of the embodiments of the present disclosure, there is provided an apparatus for communication, the apparatus is applied to a first entity in a first communication network, the first entity is configured to provide a multicast broadcast service (MBS) content for the first communication network, and the apparatus includes:
a third sending module, configured to send the multicast broadcast service (MBS) content to a proxy device through the first communication network, where the MBS content is used to indicate the proxy device to send the MBS content to a terminal device through a second communication network, the first communication network is a network that supports an MBS, and the second communication network is a network that does not support the MBS.

According to a tenth aspect of the embodiments of the present disclosure, there is provided an apparatus for communication, the apparatus is applied to a second entity in a first communication network, the second entity is configured to provide a network exposure function corresponding to an MBS service, the first communication network further includes a first entity, the first entity is configured to provide a multicast broadcast service (MBS) content for the first communication network, and the apparatus includes:
a fourth receiving module, configured to receive an MBS session establishment request message sent by the first entity, where the MBS session establishment request message includes a third indication parameter, and the third indication parameter is used to indicate that the established MBS session is a session that supports sending the MBS content to a second communication network; and
a fourth sending module, configured to send an MBS session establishment response message to the first entity in a case that the MBS session is established successfully according to the third indication parameter.

According to an eleventh aspect of the embodiments of the present disclosure, there is provided an apparatus for communication, the apparatus is applied to a first core network device in a first communication network, and the apparatus includes:
a fifth sending module, configured to send a multicast broadcast service (MBS) content to a proxy device through the first communication network, where the MBS content is used to indicate the proxy device to send the MBS content to a terminal device through a second communication network, the first communication network is a network that supports an MBS, and the second communication network is a network that does not support the MBS.

According to a twelfth aspect of the embodiments of the present disclosure, there is provided an apparatus for communication, the apparatus is applied to a second core network device in a first communication network, and the apparatus includes:
a sixth receiving module, configured to receive, through the first communication network, a session modification request message sent by a proxy device, where the session modification request message includes a second indication parameter and an MBS session identifier of a target MBS session, and the second indication parameter is used to indicate that the proxy device provides an MBS content corresponding to the target MBS session to a terminal device through a second communication network; and
a sixth sending module, configured to send a session modification command to the proxy device through the first communication network in the case of determining, according to the second indication parameter and the MBS session identifier, that the target MBS session is a session that supports sending the MBS content to the second communication network, where the session modification command is used to indicate the proxy device to join the target MBS session.

According to a thirteenth aspect of the embodiments of the present disclosure, there is provided an apparatus for communication, including:
a processor; and
a memory, configured to store an instruction executable by the processor;
where the processor is configured to perform the steps of the method for communication provided in the first aspect of the present disclosure.

According to a fourteenth aspect of the embodiments of the present disclosure, there is provided an apparatus for communication, including:
a processor; and
a memory, configured to store an instruction executable by the processor;
where the processor is configured to perform the steps of the method for communication provided in the second aspect of the present disclosure.

According to a fifteenth aspect of the embodiments of the present disclosure, there is provided an apparatus for communication, including:
a processor; and
a memory, configured to store an instruction executable by the processor;
where the processor is configured to perform the steps of the method for communication provided in the third aspect of the present disclosure.

According to a sixteenth aspect of the embodiments of the present disclosure, there is provided an apparatus for communication, including:
a processor; and
a memory, configured to store an instruction executable by the processor;
where the processor is configured to perform the steps of the method for communication provided in the fourth aspect of the present disclosure.

According to a seventeenth aspect of the embodiments of the present disclosure, there is provided an apparatus for communication, including:
a processor; and
a memory, configured to store an instruction executable by the processor;
where the processor is configured to perform the steps of the method for communication provided in the fifth aspect of the present disclosure.

According to an eighteenth aspect of the embodiments of the present disclosure, there is provided an apparatus for communication, including:
a processor; and
a memory, configured to store an instruction executable by the processor;
where the processor is configured to perform the steps of the method for communication provided in the sixth aspect of the present disclosure.

According to a nineteenth aspect of the embodiments of the present disclosure, there is provided a system for communication. The system for communication includes a terminal device, a proxy device, and a first communication network, where:
the first communication network is configured to send a multicast broadcast service (MBS) content to the proxy device;
the proxy device is configured to obtain the MBS content through the first communication network, and send the MBS content to the terminal device through a second communication network; and
the terminal device is configured to receive, through a second communication network, the MBS content sent by the proxy device;
where the first communication network is a network that supports an MBS, and the second communication network is a network that does not support the MBS.

According to a twentieth aspect of the embodiments of the present disclosure, there is provided a system for communication. The system for communication includes a terminal device, a proxy device, a third communication network, and a first entity, where:
the first entity is configured to send a multicast broadcast service (MBS) content to the proxy device through the third communication network;
the proxy device is configured to obtain the MBS content through the third communication network, and send the MBS content to the terminal device through a second communication network; and
the terminal device is configured to receive, through a second communication network, the MBS content sent by the proxy device;
where the third communication network is a network that supports an MBS, and the second communication network is a network that does not support the MBS.

The technical solutions provided in the embodiments of the present disclosure may include the following beneficial effects. The proxy device may obtain the multicast broadcast service (MBS) content through the first communication network, and send the MBS content to the terminal device through the second communication network, where the first communication network may be a network that supports the MBS, and the second communication network may be a network that does not support the MBS. In this way, the MBS service may be provided for the terminal device in the second communication network by using the proxy device.

It is to be understood that both the foregoing general description and the following detailed description are exemplary and explanatory only, which do not limit the present disclosure.

### BRIEF DESCRIPTION OF THE DRAWINGS

The accompanying drawings here, which are incorporated in and constitute a part of the description, illustrate embodiments consistent with the present disclosure, and together with the description, serve to explain the principles of the present disclosure.
FIG. 1 is a schematic diagram of a system for communication shown according to an example embodiment.
FIG. 2 is a schematic diagram of a system for communication shown according to an example embodiment.
FIG. 3 is a flowchart of a method for communication shown according to an example embodiment.
FIG. 4 is a flowchart of a method for communication shown according to an example embodiment.
FIG. 5 is a flowchart of a method for communication shown according to an example embodiment.
FIG. 6 is a flowchart of a method for communication shown according to an example embodiment.
FIG. 7 is a flowchart of a method for communication shown according to an example embodiment.
FIG. 8 is a flowchart of a method for communication shown according to an example embodiment.
FIG. 9 is a flowchart of a method for communication shown according to an example embodiment.
FIG. 10 is a flowchart of a method for communication shown according to an example embodiment.
FIG. 11 is a flowchart of a method for communication shown according to an example embodiment.
FIG. 12 is a flowchart of a method for communication shown according to an example embodiment.
FIG. 13 is a flowchart of a method for communication shown according to an example embodiment.
FIG. 14 is a flowchart of a method for communication shown according to an example embodiment.
FIG. 15 is a block diagram of an apparatus for communication shown according to an example embodiment.
FIG. 16 is a block diagram of an apparatus for communication shown according to an example embodiment.
FIG. 17 is a block diagram of an apparatus for communication shown according to an example embodiment.
FIG. 18 is a block diagram of an apparatus for communication shown according to an example embodiment.
FIG. 19 is a block diagram of an apparatus for communication shown according to an example embodiment.
FIG. 20 is a block diagram of an apparatus for communication shown according to an example embodiment.
FIG. 21 is a block diagram of an apparatus for communication shown according to an example embodiment.
FIG. 22 is a block diagram of an apparatus for communication shown according to an example embodiment.

### DETAILED DESCRIPTION

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present disclosure. By contrast, they are merely examples of apparatuses and methods consistent with some aspects of the present disclosure as detailed in the appended claims.

It should be noted that all actions for obtaining signals, information or data in the present disclosure are performed on the premise of conforming to the corresponding data protection regulation policy of the country of the location and in the case that the authorization by the owner of the corresponding apparatus is obtained.

In the description of the present disclosure, terms such as "first" and "second" used in the present disclosure are used to distinguish similar objects from each other, and are not necessarily to be understood as a specific order or sequence. In addition, unless otherwise stated, in the description referring to the accompanying drawings, the same reference numbers in different drawings represent the same elements.

In the description of the present disclosure, unless otherwise stated, "a plurality of" means two or more than two, and other quantifiers are similar to this. "At least one", "one or more " or similar expressions of them refer to any combination of these items, including any combination of a single item or a plurality of items. For example, at least one may represent any number. For another example, one or more of *a, b,* and c may represent: *a, b, c, a-b, a-c, b-c, or a-b-c,* where *a, b,* and c may be singular or plural. "And/or" is an association relationship for describing associated objects, indicating that there may be three relationships. For example, A and/or B may represent three situations that A exists alone, both A and B exist, and B exists alone, where A and B may be singular or plural.

In the embodiments of the present disclosure, although operations or steps are described in a specific order in the accompanying drawings, it should not be understood that these operations or steps are required to be performed in the specific order or serial order as shown, or all illustrated operations or steps are required to be performed to obtain a desired result. In the embodiments of the present disclosure, these operations or steps may be performed in series; these operations or steps may also be performed in parallel; or, some of these operations or steps may be performed.

The implementation environment of the embodiments of the present disclosure is firstly described below.

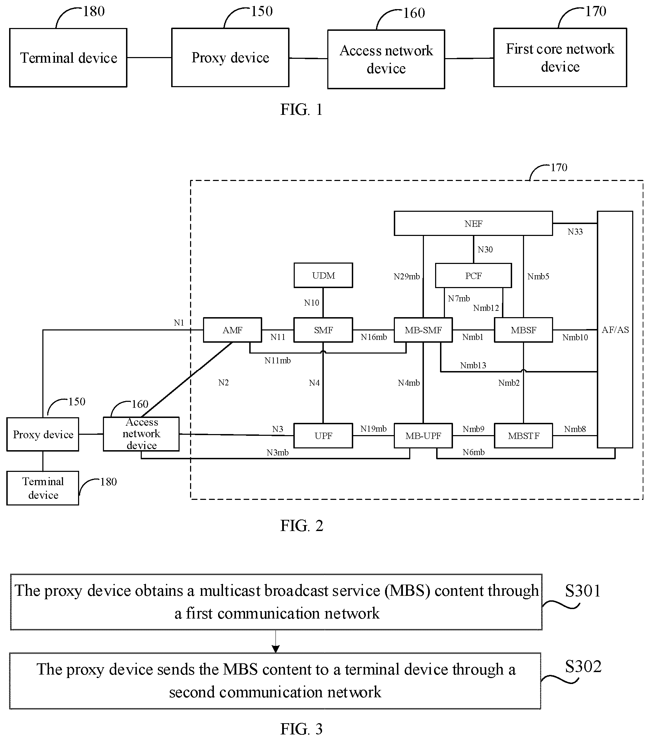

FIG. 1 is a schematic diagram of a system for communication shown according to an example embodiment. As shown in FIG. 1, the system for communication may include a proxy device 150, an access network device 160, a first core network device 170, and a terminal device 180.

Among them, the access network device 160 and the first core network device 170 may form a first communication network, which provides a communication service for the proxy device. The proxy device and the terminal device may communicate with each other through a second communication network. It should be noted that, in addition to the access network device and the first core network device, the first communication network may further include another network device, which is not limited in the present disclosure.

In some embodiments, the first communication network may be a network that supports an MBS, for example, a 4G network, a 5G network, or a 6G network in the 3GPP network. The second communication network may be a network that does not support the MBS, for example, a satellite network or a Wi-Fi network.

When the proxy device is connected to the first communication network, the proxy device may serve as user equipment (UE) in the first communication network. When the proxy device communicates with the terminal device through the second communication network, the proxy device may provide an access and service for the terminal device.

For example, the proxy device may be a satellite device supporting the first communication network (a 4G network, a 5G network, or a 6G network). The second communication network may be a satellite network. The terminal device may be a terminal supporting satellite communication.

For another example, the proxy device may be a device supporting the first communication network (a 4G network, a 5G network, or a 6G network) and supporting a wireless local area network (WLAN) network. The second communication network may be a WLAN network. The terminal device may be a terminal supporting a WLAN network.

In some embodiments, the terminal device may include a non-3GPP satellite access (N3SA).

In some embodiments, the proxy device may include non-3GPP access capable-user equipment (N3AC-UE).

FIG. 2 is a schematic diagram of another system for communication shown according to an example embodiment. As shown in FIG. 2, the first core network device 170 in the system for communication may include a plurality of functions or entities. For example, the first core network device may include one or more of an access and mobility management function (AMF), a session management function (SMF), a unified data management (UDM), a user plane function (UPF), a network exposure function (NEF), and a policy control function (PCF). For specific functions, connection relationships, and implementations of the AMF, the SMF, the UDM, the UPF, the NEF, and the PCF, reference may be made to related descriptions in related technologies (for example, the 3GPP protocol), and details are not described here again.

In some embodiments, the first core network device 170 may further include a plurality of functions or entities supporting the MBS service. For example, the first core network device 170 may further include the following functions or entities:
an MB-SMF (Multicast/Broadcast Session Management Function), where the main role of this function is to implement the session management of the multicast/broadcast service;
an MB-UPF (Multicast/Broadcast User Plane Function), where the main role of this function is to implement the user plane forwarding function of the multicast/broadcast service;
an MBSTF (Multicast/Broadcast Service Transport Function), where the main role of this function is to serve as an anchor point of MBS data traffic, a general data packet transmission function, an application program supporting IP multicast, such as a frame, a multistream, a data packet code, or the like;
an MBSF (Multicast/Broadcast Service Function), where the main role of this function is to support the MBS service, including selecting the MB-SMF, controlling the MBSTF, determining the transmission parameter, or the like; and
an AF/AS (Application Function/Application Server), where the main role of this function or server is to provide MBS multimedia, such as video or audio.

In some implementations, the AF/AS may be a function or a network element of a core network device of an operator. In some other implementations, the AF/AS may alternatively be a function or a network element provided by a third-party manufacturer other than the operator. so that the first core network device may be split into a second core network device and the AF/AS.

It should be noted that the foregoing functions or entities shown in FIG. 2 may be hardware, or may be software divided in functions, or may be a structure combined with hardware and software.

FIG. 3 is a flowchart of a method for communication shown according to an example embodiment. The method may be applied to the proxy device in the foregoing system for communication. As shown in FIG. 3, the method may include following steps.

In S301, the proxy device obtains a multicast broadcast service (MBS) content through a first communication network.

In S302, the proxy device sends the MBS content to a terminal device through a second communication network.

In some embodiments, the first communication network may be a network that supports an MBS, and the second communication network may be a network that does not support the MBS.

In some implementations, the first communication network is a 3GPP network that supports an MBS, for example, a 4G network, a 5G network, or a 6G network. The second communication network may be a non-3GPP network that does not support an MBS, for example, a satellite communication network, a wireless local area network (WLAN), or another non-3GPP network.

In the foregoing method, the proxy device may obtain the multicast broadcast service (MBS) content through the first communication network, and send the MBS content to the terminal device through the second communication network, where the first communication network may be a network that supports the MBS, and the second communication network may be a network that does not support the MBS. In this way, the MBS service may be provided for the terminal device in the second communication network by using the proxy device.

It should be noted that the MBS may provide two services of Multicast (also referred to as multicasting) and Broadcast. For the multicast service, the proxy device may provide the multicast service according to the request of the terminal device. For the broadcast service, the proxy device may directly broadcast to all or part of the terminal devices in the second communication network, for example, may broadcast to the terminal devices in a certain area.

In some embodiments, in a case that the MBS content is a broadcast content, the proxy device may send the MBS content by broadcasting through the second communication network.

In some other embodiments, in a case that the MBS content is a multicast content, the proxy device may send the MBS content to the terminal device through the second communication network in response to receiving an MBS content request message sent by the terminal device.

In some other embodiments, regardless of whether the MBS content is a broadcast content or a multicast content, the proxy device may send the MBS content to the terminal device through the second communication network in response to receiving the MBS content request message sent by the terminal device.

Among them, the MBS content request message may include an MBS content identifier (MBS content ID), and the proxy device may determine the MBS content according to the MBS content identifier. The MBS content identifier may be used to identify an MSB content. For example, if the MBS content is a first multimedia (such as, a certain movie requested by a user), the MBS content identifier may be an MBS content identifier corresponding to the first multimedia.

In this way, the proxy device may send the corresponding MBS content to the terminal device based on the MBS content request message sent by the terminal device.

In some embodiments of the present disclosure, the proxy device may send the MBS content to the terminal device in a case that the authentication of the terminal device is successful. For example, the method for communication may include following.

Firstly, the proxy device performs authentication on the terminal device in response to receiving, through the second communication network, an access request message sent by the terminal device.

The access request message may include a terminal identifier of the terminal device. For example, the terminal identifier may be a satellite terminal identifier of the terminal device in a satellite network, or the terminal identifier may be a WLAN media access control (WLAN MAC) address of the terminal device in an WLAN network. The proxy device may perform authentication (for example, certification and/or authorization) on the terminal device according to the access request message.

Secondly, in the case of determining that the authentication of the terminal device is successful, the proxy device sends the MBS content to the terminal device through the second communication network.

**In** this way, the proxy device may send the MBS content to the terminal device the authentication of which is successful, to improve network security.

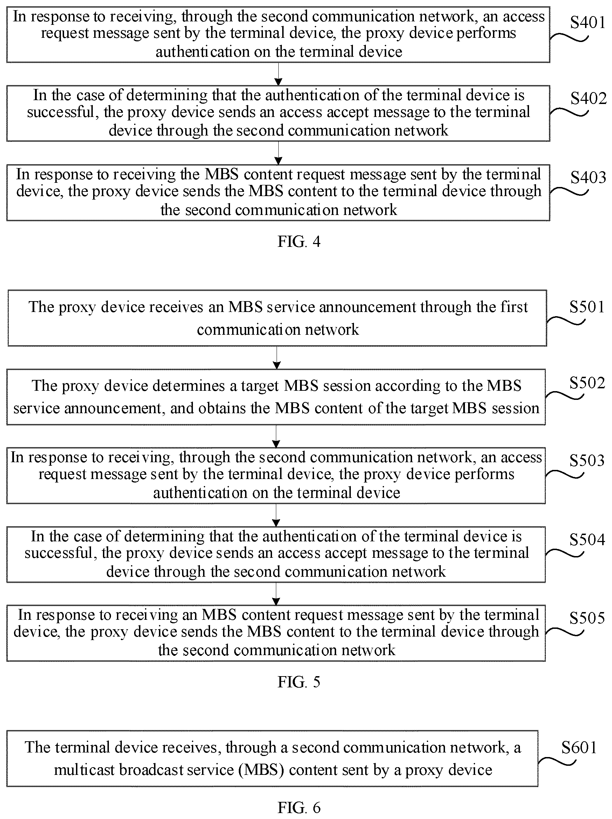

FIG. 4 is a flowchart of a method for communication shown according to an example embodiment. As shown in FIG. 4, the method may include following steps.

**In** S401, the proxy device performs authentication on the terminal device in response to receiving, through the second communication network, an access request message sent by the terminal device.

**In** S402, in the case of determining that the authentication of the terminal device is successful, the proxy device sends an access accept message to the terminal device through the second communication network.

**In** S403, the proxy device sends the MBS content to the terminal device through the second communication network in response to receiving the MBS content request message sent by the terminal device.

**In** this way, the proxy device may perform authentication on the terminal device, and send the MBS content based on the request of the terminal device in a case that the authentication is successful.

**In** some embodiments of the present disclosure, the proxy device may be used as a terminal device in the first communication network to obtain the MBS content from the first communication network.

**In** some embodiments, the proxy device may obtain the MBS content according to a procedure and a step defined in the first communication network. For example, the proxy device may receive an MBS service announcement through the first communication network, and determine the MBS content according to an MBS session in the MBS service announcement.

In some other embodiments, the proxy device may obtain the MBS content in the following manner.

Firstly, the proxy device receives the MBS service announcement through the first communication network.

Secondly, in the case of determining, according to a first indication parameter in the MBS service announcement, that the MBS content corresponding to the MBS session is supported to be sent in the second communication network, the proxy device takes the MBS session as a target MBS session.

Finally, the proxy device obtains the MBS content through the target MBS session.

Among them, the MBS service announcement may include at least one MBS session and a first indication parameter corresponding to each MBS session, where the first indication parameter is used to indicate the proxy device to determine whether it is supported to send the MBS content corresponding to the MBS session in the second communication network.

For example, the MBS service announcement may be an announcement sent by a first entity (for example, an application function (AF)) that provides an MBS service, such as Service Announcement. The first indication parameter may include an access type parameter (which may also be referred to as a radio access type parameter (RAT type parameter)) and/or an area parameter, and is used to indicate a sending range where the MBS content corresponding to the MBS session is supported.

In some implementations, the first indication parameter may include one or more access type parameters used to indicate that the MBS content of the MBS session may be supported to be sent in the network of the access type parameter. The access type parameter may include one or more of a 3GPP network (for example, a 4G network, a 5G network, a 6G network), and a non-3GPP network (for example, a satellite communication network and a WLAN network). For example, the access type parameter may include a satellite communication network, a WLAN network, and a 5G network.

In some other implementations, the first indication parameter may include one or more area parameters used to indicate that the MBS content of the MBS session may be supported to be sent in the network corresponding to the area parameter. The area parameter may indicate an area covered by a non-3GPP network, for example, an area covered by a satellite communication network or an area covered by a WLAN network. The area parameter may also be an area covered by a 3GPP network, for example, an area covered by a 4G network or an area covered by a 5G network.

In some other implementations, the first indication parameter may include one or more access type parameters and one or more area parameters.

In this way, the proxy device may determine, according to the first indication parameter, whether the MBS content corresponding to the MBS session is supported to be sent in the second communication network.

In some implementations, the proxy device may receive the session content of the target MBS session through the first communication network, and take the session content as the MBS content.

In some other implementations, the MBS service announcement may further include an MBS service type corresponding to each MBS session, and the MBS service type may be used to indicate that the MBS session is a session of a broadcast type or a session of a multicast type. In this way, the MBS content may be obtained in different manners according to different MBS service types, for example:

In a case that the MBS service type of the target MBS session is a broadcast type, the session content of the target MBS session may be received, and the received session content of the target MBS session may be taken as the MBS content.

In a case that the MBS service type of the target MBS session is a multicast type, the target MBS session may be joined through the first communication network, and the received session content of the MBS session may be taken as the MBS content.

In some embodiments, the proxy device may join the target MBS session in the following manner.

Firstly, the proxy device sends a session modification request message through the first communication network.

Then, the proxy device receives a session modification command through the first communication network, and joins the target MBS session according to the session modification command.

Among them, the session modification request message may include a second indication parameter and an MBS session identifier of the target MBS session. The second indication parameter may be used to indicate the proxy device to provide the MBS content to the terminal device through the second communication network.

The first communication network may determine, according to the second indication parameter and the MBS session identifier, whether the target MBS session supports sending the MBS content to the second communication network. In a case that it is determined, according to the second indication parameter and the MBS session identifier, that the target MBS session supports sending the MBS content to the second communication network, a session modification command is sent to the proxy device through the first communication network, where the session modification command may be used to indicate the proxy device to join the target MBS session.

In some implementations, the proxy device may send the session modification request message to an AMF through an access network device in the first communication network. The session modification request message may be a PDU session modification request; and the second indication parameter may include one or more of a capability indication parameter, an access type parameter, and an area parameter of the proxy device,

In some implementations, the second indication parameter may include a capability indication parameter, and the capability indication parameter may be a non-3GPP access capability UE indication, where the non-3GPP access capability may include a satellite access capability and/or a WLAN access capability.

In some other implementations, the second indication parameter may include one or more access type parameters used to indicate that the MBS content of the target MBS session may be supported to be sent in the network of the access type parameter. The access type parameter may include one or more of a 3GPP network (for example, a 4G network, a 5G network, a 6G network), and a non-3GPP network (for example, a satellite communication network and a WLAN network). For example, the access type parameter may include a satellite communication network, a WLAN network, and a 5G network.

In some other implementations, the second indication parameter may include one or more area parameters used to indicate that the MBS content of the target MBS session may be supported to be sent in the network corresponding to the area parameter. The area parameter may indicate an area covered by a non-3GPP network, for example, an area covered by a satellite communication network or an area covered by a WLAN network. The area parameter may also be an area covered by a 3GPP network, for example, an area covered by a 4G network or an area covered by a 5G network.

In some other implementations, the second indication parameter may include one or more of the foregoing capability indication parameter, the access type parameter, and the area parameter.

In this way, the proxy device may determine, according to the second indication parameter, whether the MBS content corresponding to the target MBS session is supported to be sent in the second communication network.

In this way, the first communication network may perform authentication and/or charging on the proxy device according to the second indication parameter.

FIG. 5 is a flowchart of a method for communication shown according to an example embodiment. As shown in FIG. 5, the method may include following steps.

In S501, the proxy device receives an MBS service announcement through the first communication network.

For example, the MBS service announcement may include at least one MBS session, and a first indication parameter and an MBS service type corresponding to each MBS session. The first indication parameter is used to indicate the proxy device to determine whether the MBS content corresponding to the MBS session is supported to be sent in the second communication network. The MBS service type may be used to indicate that the MBS session is a broadcast-type session or a multicast-type session.

In S502, the proxy device determines a target MBS session according to the MBS service announcement, and obtains the MBS content of the target MBS session.

In some embodiments, in the case of determining, according to the first indication parameter in the MBS service announcement, that the MBS content corresponding to the MBS session is supported to be sent in the second communication network, the proxy device may take the MBS session as the target MBS session, and obtain the MBS content through the target MBS session.

In some embodiments, in a case that the MBS service type of the target MBS session is a broadcast type, the session content of the target MBS session may be received, and the received session content of the target MBS session may be taken as the MBS content.

In some other embodiments, in a case that the MBS service type corresponding to the target MBS session is a multicast type, the proxy device sends a session modification request message through the first communication network, joins the target MBS session according to a received session modification command, and takes the received session content of the target MBS session as the MBS content.

In S503, the proxy device performs authentication on the terminal device in response to receiving, through the second communication network, an access request message sent by the terminal device.

In S504, in the case of determining that the authentication of the terminal device is successful, the proxy device sends an access accept message to the terminal device through the second communication network.

In S505, the proxy device sends the MBS content to the terminal device through the second communication network in response to receiving an MBS content request message sent by the terminal device.

By using the foregoing method, the proxy device may obtain the MBS content through the first communication network, and provide the MBS content for the terminal device through the second communication network, so that the non-3GPP terminal may also implement the MBS service.

FIG. 6 is a flowchart of a method for communication shown according to an example embodiment. The method may be applied to a terminal device in the foregoing system for communication. As shown in FIG. 6, the method may include following steps.

In S601, the terminal device receives, through a second communication network, a multicast broadcast service (MBS) content sent by a proxy device.

Among them, the MBS content is obtained by the proxy device through the first communication network, where the first communication network is a network that supports the MBS, and the second communication network is a network that does not support the MBS.

In this way, the terminal device may obtain the MBS content through the proxy device, to implement the MBS service.

In some embodiments, in a case that the MBS content is a broadcast content, the terminal device may directly receive, through the second communication network, the MBS content sent by the proxy device through broadcast.

In some other embodiments, in a case that the MBS content is a multicast content, the terminal device may send an MBS content request message to the proxy device through the second communication network, and receive, through the second communication network, the MBS content sent by the proxy device according to the MBS content request message, where the MBS content request message is used to indicate the proxy device to send the MBS content through the second communication network.

In some other embodiments, regardless of whether the MBS content is a broadcast content or a multicast content, the terminal device may send the MBS content request message to the proxy device through the second communication network, and receive, through the second communication network, the MBS content sent by the proxy device according to the MBS content request message.

Among them, the MBS content request message may include an MBS content identifier (MBS content ID), and may be used to indicate the proxy device to determine the MBS content according to the MBS content identifier.

In this way, the terminal device may obtain, by sending the MBS content request message, the MBS content sent by the proxy device.

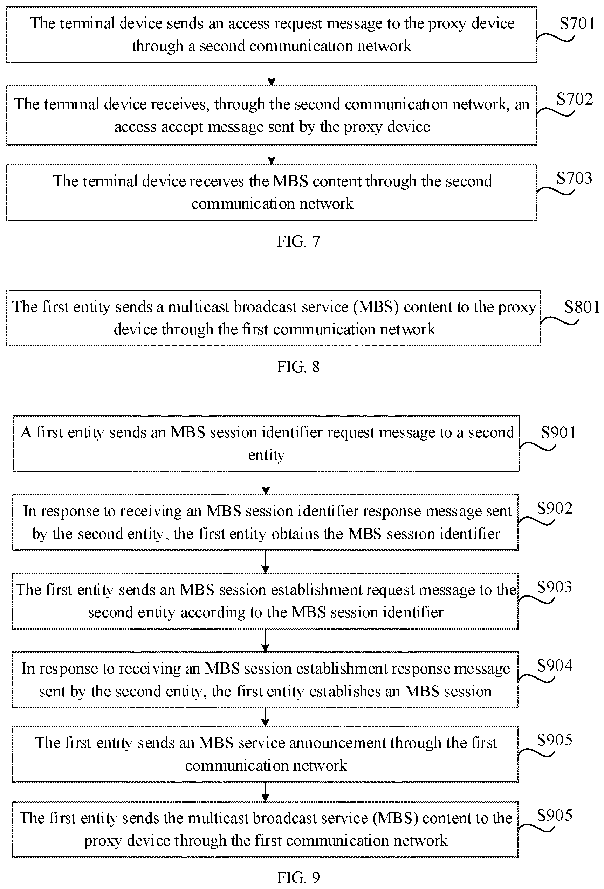

FIG. 7 is a flowchart of a method for communication shown according to an example embodiment. As shown in FIG. 7, the method may include following steps.

In S701, the terminal device sends an access request message to the proxy device through a second communication network.

The access request message may be used to indicate the proxy device to perform authentication on the terminal device.

In some embodiments, the access request message may include a terminal identifier of the terminal device. For example, the terminal identifier may be a satellite terminal identifier of the terminal device in a satellite network, or the terminal identifier may be a WLAN media access control (WLAN MAC) address of the terminal device in a WLAN network. The proxy device may perform authentication (for example, certification and/or authorization) on the terminal device according to the access request message.

In S702, the terminal device receives, through the second communication network, an access accept message sent by the proxy device.

Among them, the access accept message may be used to indicate that the authentication of the terminal device is successful.

In S703, the terminal device receives the MBS content through the second communication network.

In some embodiments, the MBS content may be received through the second communication network in a case that it is determined, according to the access accept message, that the authentication of the terminal device is successful.

In some embodiments, in a case of receiving the access accept message, the terminal device may determine that the authentication of the terminal device is successful, send the MBS content request message to the proxy device through the second communication network, and receive the MBS content through the second communication network.

In this way, the terminal device may first be authenticated, and receive the MBS content after the authentication is successful, thus improving network security.

FIG. 8 is a flowchart of a method for communication shown according to an example embodiment. The method may be applied to a first entity in the first communication network. The first entity may be configured to provide a multicast broadcast service (MBS) content for the first communication network. For example, the first entity may be an AF/AS in the system for communication shown in FIG. 2. As shown in FIG. 8, the method may include following steps.

In S801, the first entity sends a multicast broadcast service (MBS) content to the proxy device through the first communication network.

Among them, the MBS content is used to indicate the proxy device to send the MBS content to the terminal device through the second communication network, where the first communication network is a network that supports the MBS, and the second communication network is a network that does not support the MBS.

In this way, the first entity may send the MBS content to the proxy device through the first communication network, and may indicate the proxy device to provide the MBS content to the terminal device in the second communication network.

In some embodiments of the present disclosure, the first entity may further establish an MBS session, and send an MBS service announcement through the first communication network. Among them, the MBS service announcement includes at least one MBS session and a first indication parameter corresponding to each MBS session, where the first indication parameter is used to indicate the proxy device to determine whether the MBS content corresponding to the MBS session is supported to be sent in the second communication network.

In some implementations, the MBS service announcement may further include an MBS service type corresponding to each MBS session, and the MBS service type may be used to indicate that the MBS session is a broadcast-type session or a multicast-type session.

In this way, the first entity may notify the proxy device of the first indication parameter and the MBS service type corresponding to the MBS session by using the MBS service announcement.

In some embodiments of the present disclosure, the first communication network may further include a second entity, and the second entity may be configured to provide a network exposure function corresponding to the MBS service. For example, the second entity may be a NEF or an MBSTF in the system for communication shown in FIG. 2. The first entity may further send an MBS session establishment request message to the second entity, and establish an MBS session in response to receiving an MBS session establishment response message sent by the second entity.

Among them, the MBS session establishment request message may include a third indication parameter, and the third indication parameter is used to indicate that the established MBS session is a session that supports sending the MBS content to the second communication network.

The third indication parameter may be the same as or different from the first indication parameter.

In some implementations, the third indication parameter may include one or more access type parameters used to indicate that the MBS content of the MBS session may be supported to be sent in the network of the access type parameter. The access type parameter may include one or more of a 3GPP network (for example, a 4G network, a 5G network, a 6G network), and a non-3GPP network (for example, a satellite communication network and a WLAN network). For example, the access type parameter may include a satellite communication network, a WLAN network, and a 5G network.

In some other implementations, the third indication parameter may include one or more area parameters used to indicate that the MBS content of the MBS session may be supported to be sent in the network of the area parameter. The area parameter may indicate an area covered by a non-3GPP network, for example, an area covered by a satellite communication network or an area covered by a WLAN network. The area parameter may also be an area covered by a 3GPP network, for example, an area covered by a 4G network or an area covered by a 5G network.

In some other implementations, the third indication parameter may include one or more access type parameters and one or more area parameters.

For example, the MBS session establishment request message may be a *Nnef_MBSSession_Create* message. The third indication parameter may include an MBS service area parameter used to indicate the second communication network, for example, may include a non-3GPP service area identifier (non-3GPP service area ID).

In this way, the first entity may establish the MBS session by using the MBS session establishment request message.

In some embodiments, the first entity may further send an MBS session identifier request message to the second entity, obtain the MBS session identifier in response to receiving an MBS session identifier response message sent by the second entity, and send an MBS session establishment request message to the second entity according to the MBS session identifier.

Among them, the MBS session identifier request message may include a fourth indication parameter, and the fourth indication parameter is used to indicate that the requested MBS session is a session that support sending the MBS content to the second communication network.

Similarly, the fourth indication parameter may be the same as or different from the first indication parameter.

In some implementations, the fourth indication parameter may include one or more access type parameters used to indicate that the MBS content of the MBS session may be supported to be sent in the network of the access type parameter. The access type parameter may include one or more of a 3GPP network (for example, a 4G network, a 5G network, a 6G network), and a non-3GPP network (for example, a satellite communication network and a WLAN network). For example, the access type parameter may include a satellite communication network, a WLAN network, and a 5G network.

In some other implementations, the fourth indication parameter may include one or more area parameters used to indicate that the MBS content of the MBS session may be supported to be sent in the network of the area parameter. The area parameter may indicate an area covered by a non-3GPP network, for example, an area covered by a satellite communication network or an area covered by a WLAN network. The area parameter may also be an area covered by a 3GPP network, for example, an area covered by a 4G network or an area covered by a 5G network.

In some other implementations, the fourth indication parameter may include one or more access type parameters and one or more area parameters.

For example, the MBS session identifier request message may include a *Nnef_MBSTMGI_Allocate,* and the fourth indication parameter may be used to indicate a non-3GPP access type parameter of the second communication network, which is used to indicate an access through a satellite communication network or a WLAN network.

In this way, the first entity may establish the MBS session by using the MBS session establishment request message.

FIG. 9 is a flowchart of a method for communication shown according to an example embodiment. As shown in FIG. 9, the method may include following steps.

In S901, a first entity sends an MBS session identifier request message to a second entity.

In S902, the first entity obtains the MBS session identifier in response to receiving an MBS session identifier response message sent by the second entity.

In S903, the first entity sends an MBS session establishment request message to the second entity according to the MBS session identifier.

In S904, the first entity establishes an MBS session in response to receiving an MBS session establishment response message sent by the second entity.

In S905, the first entity sends an MBS service announcement through the first communication network.

In S906, the first entity sends the multicast broadcast service (MBS) content to the proxy device through the first communication network.

It should be noted that, for the specific implementation of the foregoing steps in the embodiment, reference may be made to the description in the foregoing embodiments of the present disclosure, and details are not described here again.

In this way, the first entity may send the MBS service announcement through the first communication network, and send the MBS content to the proxy device.

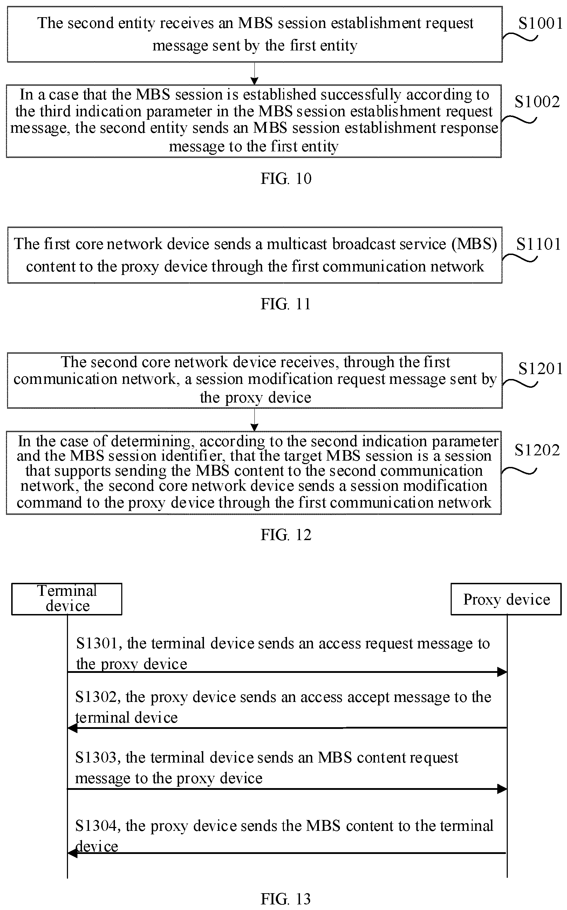

FIG. 10 is a flowchart of a method for communication shown according to an example embodiment. The method may be applied to a second entity in a first communication network, and the second entity may be configured to provide a network exposure function corresponding to an MBS service. The first communication network further includes a first entity, and the first entity may be configured to provide a multicast broadcast service (MBS) content for the first communication network. For example, the second entity may be a NEF or MBSTF in FIG. 2, and the first entity may be an AF/AS in the system for communication shown in FIG. 2. As shown in FIG. 10, the method may include following steps.

In S1001, the second entity receives an MBS session establishment request message sent by the first entity.

Among them, the MBS session establishment request message includes a third indication parameter, and the third indication parameter is used to indicate that the established MBS session is a session that support sending the MBS content to the second communication network.

In S1002, in a case that the MBS session is established successfully according to the third indication parameter in the MBS session establishment request message, the second entity sends an MBS session establishment response message to the first entity.

It should be noted that the second entity may perform message interaction with the NRF and/or the MB-SMF in the system for communication shown in FIG. 2 to establish an MBS session. For a specific message interaction manner, reference may be made to related descriptions in related technologies (for example, the 3GPP protocol), and details are not described here again.

In this way, the second entity may establish an MBS session for the first entity according to the MBS session establishment request message.

In some embodiments of the present disclosure, the second entity may further allocate a session identifier to the first entity in the following manner.

Firstly, an MBS session identifier request message sent by the first entity is received.

Among them, the MBS session identifier request message includes a fourth indication parameter, and the fourth indication parameter is used to indicate that the requested MBS session is a session that support sending the MBS content to the second communication network.

Secondly, in a case that the MBS session identifier is allocated successfully according to the fourth indication parameter, an MBS session identifier response message is sent to the first entity.

Among them, the MBS session identifier response message includes the MBS session identifier.

It should be noted that the second entity may perform message interaction with the NRF and/or the MB-SMF in the system for communication shown in FIG. 2 to obtain the MBS session identifier. For a specific message interaction manner, reference may be made to related descriptions in related technologies (for example, the 3GPP protocol), and details are not described here again.

In some implementations, the MBS session identifier response message may be used to indicate the first entity to send the MBS session establishment request message to the second entity according to the MBS session identifier.

In this way, the second entity may allocate the MBS session identifier to the first entity according to the MBS session identifier request message.

FIG. 11 is a flowchart of a method for communication shown according to an example embodiment. The method may be applied to a first core network device in a first communication network, for example, the first core network device shown in FIG. 2. As shown in FIG. 11, the method may include following step.

In S1101, the first core network device sends a multicast broadcast service (MBS) content to the proxy device through the first communication network.

Among them, the MBS content is used to indicate the proxy device to send the MBS content to the terminal device through the second communication network, where the first communication network is a network that supports the MBS, and the second communication network is a network that does not support the MBS.

In some embodiments of the present disclosure, the first core network device may further send an MBS service announcement to the proxy device through the first communication network.

Among them, the MBS service announcement includes at least one MBS session and a first indication parameter corresponding to each MBS session, and the first indication parameter is used to indicate the proxy device to determine whether the MBS content corresponding to the MBS session is supported to be sent in the second communication network.

In some embodiments of the present disclosure, the first core network device may include the first entity and the second entity. The specific implementation of the foregoing step may refer to the implementations of the first entity and the second entity in the foregoing embodiments of the present disclosure, and details are not described here again.

FIG. 12 is a flowchart of a method for communication shown according to an example embodiment. The method may be applied to a second core network device in a first communication network. The second core network device may be a device composed of functions or entities other than the AF/AS in the first core network device in FIG. 2. As shown in FIG. 12, the method may include following steps.

In S1201, the second core network device receives, through the first communication network, a session modification request message sent by the proxy device.

Among them, the session modification request message includes a second indication parameter and an MBS session identifier of a target MBS session, and the second indication parameter is used to indicate that the proxy device provides the MBS content corresponding to the target MBS session to the terminal device through the second communication network.

In S1202, the second core network device sends a session modification command to the proxy device through the first communication network in the case of determining, according to the second indication parameter and the MBS session identifier, that the target MBS session is a session that supports sending the MBS content to the second communication network.

Among them, the session modification command may be used to indicate the proxy device to join the target MBS session.

For example, the session modification command may be sent to the proxy device by using the access network device in the first communication network.

In some embodiments of the present disclosure, the second core network device may include an AMF, an SMF, a UDM, a UPF, a NEF, a PCF, an MB-SMF, an MB-UPF, an MBSTF, and an MBSF. The foregoing steps may be implemented by using an AMF, or may be implemented by message interaction between an AMF and an SMF.

In this way, the second core network device may process the session modification request message of the proxy device, and indicate the proxy device to join the target MBS session through the session modification command.

FIG. 13 is a flowchart of a method for communication shown according to an example embodiment. As shown in FIG. 13, the method may include following steps.

In S1301, the terminal device sends an access request message to the proxy device.

For example, the terminal device may send the access request message to the proxy device through the second communication network, where the access request message may be used to indicate the proxy device to perform authentication on the terminal device.

In S1302, the proxy device sends an access accept message to the terminal device.

For example, the proxy device may perform authentication on the terminal device in response to receiving, through the second communication network, the access request message sent by the terminal device, and send an access accept message to the terminal device through the second communication network in the case of determining that the authentication of the terminal device is successful.

In S1303, the terminal device sends an MBS content request message to the proxy device.

For example, the terminal device may send the MBS content request message to the proxy device through the second communication network.

In S1304, the proxy device sends the MBS content to the terminal device.

For example, the proxy device may send the MBS content to the terminal device through the second communication network in response to receiving an MBS content request message sent by the terminal device.

Among them, the MBS content may be an MBS content obtained by the proxy device through the first communication network.

It should be noted that, for the specific implementation of the foregoing steps in the embodiment, reference may be made to the description in the foregoing embodiments of the present disclosure, and details are not described here again.

By using the foregoing method, the proxy device may provide the MBS content to the terminal device.

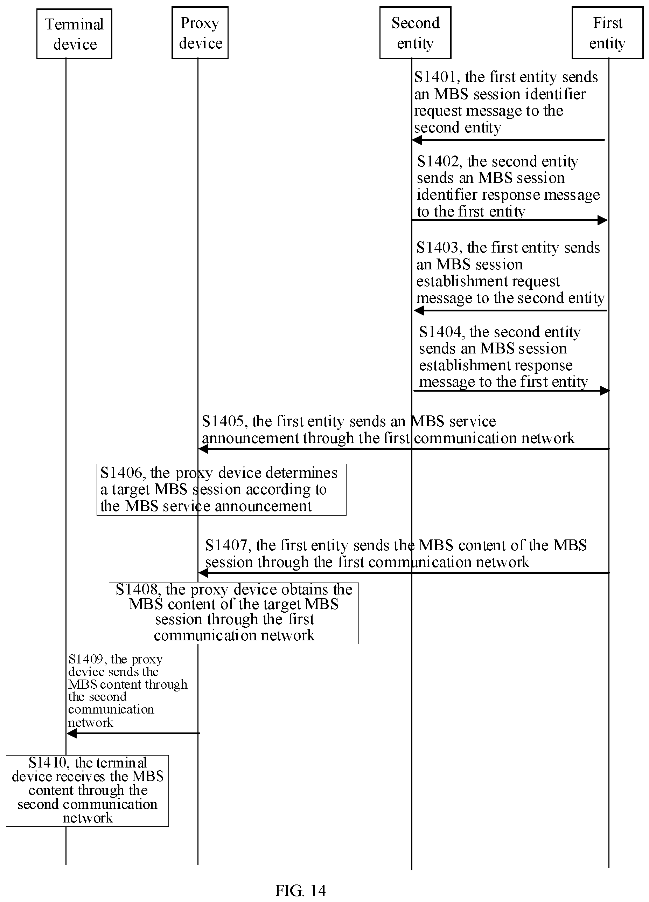

FIG. 14 is a flowchart of a method for communication shown according to an example embodiment. As shown in FIG. 14, the method may include following steps.

In S1401, the first entity sends an MBS session identifier request message to the second entity.

Among them, the first entity may be an AF/AS in the system for communication shown in FIG. 2, and the second entity may be a NEF or an MBSTF in the system for communication shown in FIG. 2. The MBS session identifier request message may include a fourth indication parameter, where the fourth indication parameter is used to indicate that the requested MBS session is a session that supports sending the MBS content to the second communication network.

In some embodiments, the MBS session identifier request message may be a *Nnef_MBSTMGI_Allocate Request,* and the MBS session identifier request message may be used to request for an MBS session identifier and/or an MBS service area. The TMGI may be used to indicate a new MBS session, and the MBS service area may be used to indicate a service area that may be allocated to the TMGI.

Among them, the MBS session identifier may include a temporary mobile group identity (TMGI).

In S1402, the second entity sends an MBS session identifier response message to the first entity.

In some embodiments, the MBS session identifier response message may include: allocating an MBS session identifier and/or an MBS service area to the first entity in response to the MBS session identifier request message, and sending the MBS session identifier and/or the MBS service area by using the session identifier response message.

It should be noted that the second entity may perform message interaction with the NRF and/or the MB-SMF in the system for communication shown in FIG. 2 to obtain the MBS session identifier. For the specific message interaction manner, reference may be made to related descriptions in related technologies (for example, the 3GPP protocol), and details are not described here again.

In S1403, the first entity sends an MBS session establishment request message to the second entity.

For example, the first entity obtains the MBS session identifier in response to receiving the MBS session identifier response message sent by the second entity, and sends the MBS session establishment request message to the second entity according to the MBS session identifier.

Among them, the MBS session establishment request message may include a third indication parameter, and the third indication parameter is used to indicate that the established MBS session is a session that supports sending the MBS content to the second communication network.

In S1404, the second entity sends an MBS session establishment response message to the first entity.

It should be noted that the second entity may perform message interaction with the NRF and/or the MB-SMF in the system for communication shown in FIG. 2 to establish an MBS session. For the specific message interaction manner, reference may be made to related descriptions in related technologies (for example, the 3GPP protocol), and details are not described here again.

In S1405, the first entity sends an MBS service announcement through the first communication network.

For example, the first entity establishes an MBS session in response to receiving the MBS session establishment response message sent by the second entity, and sends the MBS service announcement through the first communication network.

In S1406, the proxy device determines a target MBS session according to the MBS service announcement.

In some embodiments, in a case that the proxy device determines, according to the first indication parameter in the MBS service announcement, that the MBS content corresponding to the MBS session is supported to be sent in the second communication network, the proxy device may take the MBS session as the target MBS session.

In S1407, the first entity sends the MBS content of the MBS session through the first communication network.

In S1408, the proxy device obtains the MBS content of the target MBS session through the first communication network.

In S1409, the proxy device sends the MBS content through the second communication network.

In S1410, the terminal device receives the MBS content through the second communication network.

It should be noted that, for the specific implementation of the foregoing steps in the embodiment, reference may be made to the description in the foregoing embodiments of the present disclosure, and details are not described here again.

By using foregoing method, the proxy device may provide the MBS content to the terminal device.

As shown in FIG. 1, an embodiment of the present disclosure provides a system for communication, where the system for communication may include a terminal device, a proxy device, and a first communication network. The first communication network may include the access network device and the core network device in FIG. 1. where:
The first communication network is configured to send a multicast broadcast service (MBS) content to the proxy device.

The proxy device is configured to obtain the MBS content through the first communication network, and send the MBS content to the terminal device through a second communication network.

The terminal device is configured to receive, through the second communication network, the MBS content sent by a proxy device.

Among them, the first communication network is a network that supports an MBS, and the second communication network is a network that does not support an MBS.

As shown in FIG. 2, an embodiment of the present disclosure provides another system for communication. The system for communication may include a terminal device, a proxy device, a third communication network, and a first entity, where the first entity is configured to provide a multicast broadcast service (MBS) content. For example, the first entity may be an AF/AS in the system for communication shown in FIG. 2. The third communication network may include entities such as the access device, the AMF, the SMF, the UDM, the UPF, the NEF, the PCF, the MB-SMF, the MB-UPF, the MBSTF, and the MBSF in FIG. 2. where:
The first entity is configured to send a multicast broadcast service (MBS) content to the proxy device through the third communication network.

The proxy device is configured to obtain the MBS content through the third communication network, and send the MBS content to the terminal device through a second communication network.

The terminal device is configured to receive, through the second communication network, the MBS content sent by the proxy device.

Among them, the third communication network is a network that supports the MBS, and the second communication network is a network that does not support the MBS.

In some embodiments, the first entity may be a third-party entity other than an operator network (for example, the third communication network), and the third-party entity may be configured to provide the MBS content.

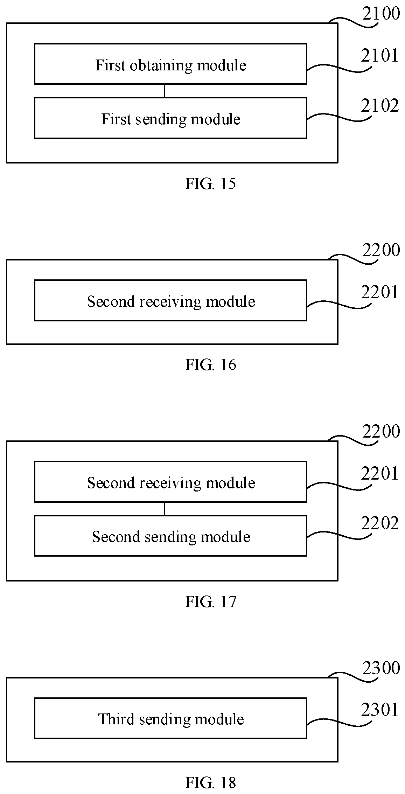

FIG. 15 is a block diagram of an apparatus 2100 for communication shown according to an example embodiment. The apparatus for communication may be applied to in a proxy device. As shown in FIG. 15, the apparatus 2100 may include a first obtaining module 2101 and a first sending module 2102.

The first obtaining module 2101 is configured to obtain a multicast broadcast service (MBS) content through a first communication network.

The first sending module 2102 is configured to send the MBS content to a terminal device through a second communication network.

Among them, the first communication network is a network that supports an MBS, and the second communication network is a network that does not support the MBS.

In some embodiments, the first sending module 2102 is configured to send the MBS content to the terminal device through the second communication network in response to receiving an MBS content request message sent by the terminal device.

In some embodiments, the first sending module 2102 is configured to send the MBS content by broadcasting through the second communication network in a case that the MBS content is a broadcast content.

In some embodiments, the first sending module 2102 is further configured to: perform authentication on the terminal device in response to receiving an access request message sent by the terminal device through the second communication network; and send the MBS content to the terminal device through the second communication network in the case of determining that the authentication of the terminal device is successful.

In some embodiments, the first sending module 2102 is further configured to send an access accept message to the terminal device through the second communication network in the case of determining that the authentication of the terminal device is successful.

In some embodiments, the first obtaining module 2101 is configured to: receive an MBS service announcement through the first communication network, where the MBS service announcement includes at least one MBS session and a first indication parameter corresponding to each MBS session, the first indication parameter is used to indicate the proxy device to determine whether MBS content corresponding to the MBS session is supported to be sent in the second communication network; in the case of determining, according to the first indication parameter, that MBS content corresponding to the MBS session is supported to be sent in the second communication network, take the MBS session as a target MBS session; and obtain the MBS content through the target MBS session.

In some embodiments, the MBS service announcement further includes an MBS service type corresponding to each MBS session. The first obtaining module 2101 is configured to: in a case that the MBS service type of the target MBS session is a broadcast type, take the received session content of the target MBS session as the MBS content; or, in a case that the MBS service type of the target MBS session is a multicast type, join the target MBS session through the first communication network, and take the received session content of the MBS session as the MBS content.

In some embodiments, the first obtaining module 2101 is configured to: send a session modification request message through the first communication network, where the session modification request message includes a second indication parameter and an MBS session identifier of the target MBS session, and the second indication parameter is used to indicate that the proxy device provides the MBS content to the terminal device through the second communication network; receive a session modification command through the first communication network; and join the target MBS session according to the session modification command.

In some embodiments, the first communication network is a 3GPP network, and the second communication network is a non-3GPP network.

In some embodiments, the second communication network is a satellite communication network or a wireless local area network (WLAN).

FIG. 16 is a block diagram of an apparatus 2200 for communication shown according to an example embodiment. The apparatus for communication may be applied in a terminal device. As shown in FIG. 16, the apparatus 2200 may include a second receiving module 2201.

The second receiving module 2201 is configured to receive, through a second communication network, a multicast broadcast service (MBS) content sent by a proxy device, where the MBS content is obtained by the proxy device through a first communication network, the first communication network is a network that supports an MBS, and the second communication network is a network that does not support the MBS.

FIG. 17 is a block diagram of an apparatus 2200 for communication shown according to an example embodiment. As shown in FIG. 17, the apparatus 2200 may further include a second sending module 2202.

The second sending module 2202 is configured to send an MBS content request message to the proxy device through the second communication network, where the MBS content request message is used to indicate the proxy device to send the MBS content through the second communication network.

In some embodiments, the second sending module 2202 is further configured to send an access request message to the proxy device through the second communication network, where the access request message is used to indicate the proxy device to perform authentication on the terminal device.

The second receiving module 2201 is configured to: receive an access accept message sent by the proxy device through the second communication network, where the access accept message is used to indicate that the authentication of the terminal device is successful; and in the case of determining, according to the access accept message, that the authentication of the terminal device is successful, receive the MBS content through the second communication network.

In some embodiments, the first communication network is a 3GPP network, and the second communication network is a non-3GPP network.

In some embodiments, the second communication network is a satellite communication network or a wireless local area network (WLAN).

FIG. 18 is a block diagram of an apparatus 2300 for communication shown according to an example embodiment. The apparatus for communication may be applied in a first entity in a first communication network, and the first entity is configured to provide a multicast broadcast service (MBS) content for the first communication network. As shown in FIG. 18, the apparatus 2300 may include a third sending module 2301.

The third sending module 2301 is configured to send the multicast broadcast service (MBS) content to a proxy device through the first communication network, where the MBS content is used to indicate the proxy device to send the MBS content to a terminal device through a second communication network, the first communication network is a network that supports an MBS, and the second communication network is a network that does not support the MBS.

In some embodiments, the third sending module 2301 is further configured to establish an MBS session, and send an MBS service announcement through the first communication network, where the MBS service announcement includes at least one MBS session and a first indication parameter corresponding to each MBS session. The first indication parameter is used to indicate the proxy device to determine whether the MBS content corresponding to the MBS session is supported to be sent in a second communication network.

In some embodiments, the first communication network further includes a second entity, and the second entity is configured to provide a network exposure function corresponding to the MBS service. The third sending module 2301 is configured to: send an MBS session establishment request message to the second entity, where the MBS session establishment request message includes a third indication parameter, and the third indication parameter is used to indicate that the established MBS session is a session that supports sending the MBS content to the second communication network; and, in response to receiving an MBS session establishment response message sent by the second entity, establish the MBS session.

In some embodiments, the third sending module 2301 is further configured to: send an MBS session identifier request message to the second entity, where the MBS session identifier request message includes a fourth indication parameter, and the fourth indication parameter is used to indicate that the requested MBS session is a session that supports sending the MBS content to the second communication network; in response to receiving an MBS session identifier response message sent by the second entity, obtain an MBS session identifier; and send the MBS session establishment request message to the second entity according to the MBS session identifier.

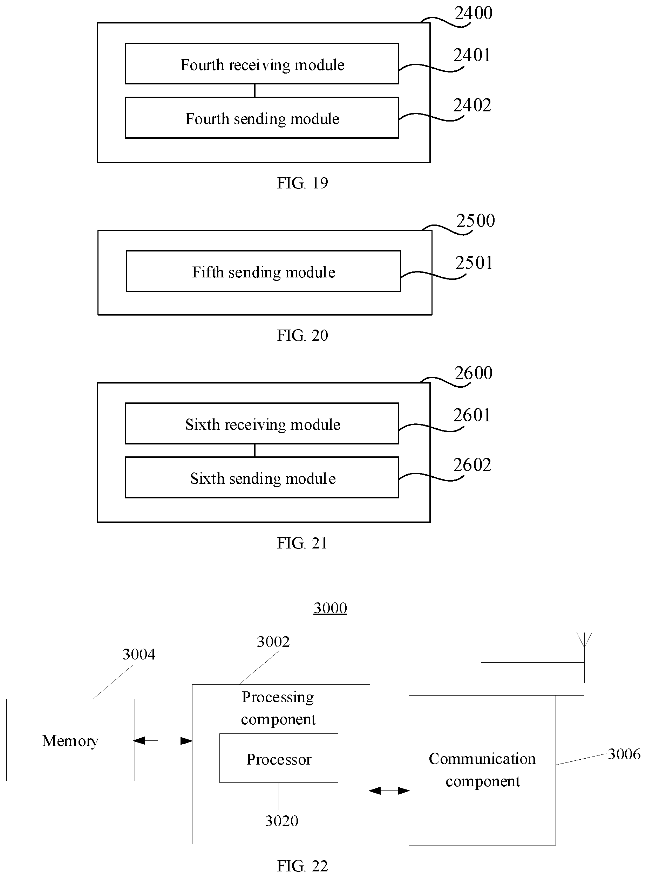

FIG. 19 is a block diagram of an apparatus 2400 for communication shown according to an example embodiment. The apparatus for communication may be applied in a second entity in a first communication network, the second entity is configured to provide a network exposure function corresponding to an MBS service, the first communication network further includes a first entity, and the first entity is configured to provide a multicast broadcast service (MBS) content for the first communication network. As shown in FIG. 19, the apparatus 2400 may include a fourth receiving module 2401 and a fourth sending module 2402.

The fourth receiving module 2401 is configured to receive an MBS session establishment request message sent by the first entity, where the MBS session establishment request message includes a third indication parameter, and the third indication parameter is used to indicate that the established MBS session is a session that supports sending the MBS content to a second communication network.

The fourth sending module 2402 is configured to send an MBS session establishment response message to the first entity in a case that the MBS session is established successfully according to the third indication parameter.

In some embodiments, the fourth receiving module 2401 is further configured to receive an MBS session identifier request message sent by the first entity, where the MBS session identifier request message includes a fourth indication parameter, and the fourth indication parameter is used to indicate that the requested MBS session is a session that supports sending the MBS content to the second communication network.

The fourth sending module 2402 is further configured to send an MBS session identifier response message to the first entity in a case that the MBS session identifier is allocated successfully according to the fourth indication parameter, where the MBS session identifier response message includes an allocated MBS session identifier.

FIG. 20 is a block diagram of an apparatus 2500 for communication shown according to an example embodiment. The apparatus for communication may be applied in a first core network device in a first communication network. As shown in FIG. 20, the apparatus 2500 may include a fifth sending module 2501.

The fifth sending module 2501 is configured to send a multicast broadcast service (MBS) content to a proxy device through a first communication network, where the MBS content is used to indicate the proxy device to send the MBS content to a terminal device through a second communication network, the first communication network is a network that supports an MBS, and the second communication network is a network that does not support the MBS.

In some embodiments, the fifth sending module 2501 is further configured to send an MBS service announcement to the proxy device through the first communication network, where the MBS service announcement includes at least one MBS session and a first indication parameter corresponding to each MBS session, and the first indication parameter is used to indicate the proxy device to determine whether the MBS content corresponding to the MBS session is supported to be sent in the second communication network.

FIG. 21 is a block diagram of an apparatus 2600 for communication shown according to an example embodiment. The apparatus for communication may be applied in a second core network device in a first communication network. As shown in FIG. 21, the apparatus 2600 may include a sixth receiving module 2601 and a sixth sending module 2602.

The sixth receiving module 2601 is configured to receive, through the first communication network, a session modification request message sent by the proxy device, where the session modification request message includes a second indication parameter and an MBS session identifier of a target MBS session, and the second indication parameter is used to indicate that the proxy device provides the MBS content corresponding to the target MBS session to the terminal device through a second communication network.

The sixth sending module 2602 is configured to send a session modification command to the proxy device through the first communication network in the case of determining, according to the second indication parameter and the MBS session identifier, that the target MBS session is a session that supports sending the MBS content to the second communication network, where the session modification command is used to indicate the proxy device to join the target MBS session.

With respect to the apparatus in the above embodiments, the specific manners for the various modules to perform operations have been described in detail in the embodiments related to the method, which will not be described in detail here.

FIG. 22 is a block diagram of an apparatus for communication shown according to an example embodiment. The apparatus 3000 for communication may be a proxy device, a terminal device, a first core network device, a second core network device, a first entity, or a second entity in the system for communication shown in FIG. 1.

Referring to FIG. 22, the apparatus 3000 may include one or more of the following components: a processing component 3002, a memory 3004, and a communication component 3006.

The processing component 3002 may be configured to control overall operations of the apparatus 3000, such as operations associated with display, telephone calls, data communications, camera operations, and recording operations. The processing component 3002 may include one or more processors 3020 to execute instructions to complete all or part of the steps of the foregoing method for communication. In addition, the processing component 3002 may include one or more modules which facilitate the interaction between the processing component 3002 and other components. For example, the processing component 3002 may include a multimedia module to facilitate interaction between the multimedia component and the processing component 3002.

The memory 3004 is configured to store various types of data to support the operation of the apparatus 3000. Examples of such data include instructions for any application or method operating on the apparatus 3000, contact data, phonebook data, messages, pictures, videos, etc. The memory 3004 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component 3006 is configured to facilitate wired or wireless communication between the apparatus 3000 and other devices. The apparatus 3000 may access a wireless network based on a communication standard, such as Wi-Fi, 2G, 3G, 4G, 5G, 6G, NB-IoT, eMTC, etc., or a combination of them. In an example embodiment, the communication component 3006 receives a broadcast signal or broadcast related information from an external broadcast management system via a broadcast channel. In an example embodiment, the communication component 3006 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the method for communication described above.

The apparatus 3000 may be an independent electronic device, or may be a part of an independent electronic device. For example, in an embodiment, the electronic device may be an integrated circuit (IC) or a chip, where the integrated circuit may be an IC or a set of more than one IC. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), etc. The integrated circuit or the chip may be configured to execute an executable instruction (or code) to implement the foregoing method for communication. Among them, the executable instruction may be stored in the integrated circuit or the chip, or may be obtained from another apparatus or device. For example, the integrated circuit or the chip includes a processor, a memory, and an interface configured to communicate with another apparatus. The executable instruction may be stored in the processor, and when the executable instruction is executed by the processor, the foregoing method for communication is implemented; or the integrated circuit or the chip may receive the executable instruction through the interface and transmit the executable instruction to the processor for execution, to implement the foregoing method for communication.

In an example embodiment, the present disclosure further provides a computer-readable storage medium, on which a computer program instruction is stored. When the program instruction is executed by a processor, the steps of the method for communication provided in the present disclosure are implemented. For example, the computer-readable storage medium may be a non-transitory computer-readable storage medium including an instruction, for example, may be the memory 3004 including an instruction, and the instruction may be executed by the processor 3020 of the apparatus 3000 to complete the foregoing method for communication. For example, the non-transitory computer-readable storage medium may be a ROM, a random access memory (RAM), a CD-ROM, a magnetic tape, a floppy disk, an optical data storage device, or the like.

In another example embodiment, there is further provided a computer program product. The computer program product includes a computer program executable by a programmable apparatus, and the computer program has a code portion for performing the foregoing method for communication when executed by the programmable apparatus.

Other embodiments of the present disclosure will be apparent to those skilled in the art from consideration of the description and practice of the present disclosure. The present application is intended to cover any variations, uses, or adaptations of the present disclosure following the general principles of the present disclosure and including common general knowledge and conventional technical means in the art not disclosed in the present disclosure. The description and embodiments should be considered as exemplary only, with a true scope and spirit of the present disclosure being indicated by the following claims.

It should be understood that the present disclosure is not limited to the precise structures that have been described above and shown in the accompanying drawings, and various modifications and changes may be made without departing from the scope of the present disclosure. The scope of the present disclosure is only limited by the appended claims.

## Claims

1. A method for communication, applied to a proxy device, and comprising:
obtaining a multicast broadcast service, MBS, content through a first communication network; and
sending the MBS content to a terminal device through a second communication network;
wherein the first communication network is a network that supports an MBS, and the second communication network is a network that does not support the MBS.

2. The method according to claim 1, wherein sending the MBS content to the terminal device through the second communication network comprises:
sending the MBS content to the terminal device through the second communication network in response to receiving an MBS content request message sent by the terminal device.

3. The method according to claim 1, wherein sending the MBS content to the terminal device through the second communication network comprises:
in a case that the MBS content is a broadcast content, sending the MBS content by broadcasting through the second communication network.

4. The method according to claim 1, further comprising:
performing authentication on the terminal device in response to receiving, through the second communication network, an access request message sent by the terminal device;
wherein sending the MBS content to the terminal device through the second communication network comprises:
sending the MBS content to the terminal device through the second communication network in a case of determining that authentication of the terminal device is successful.

5. The method according to claim 4, further comprising:
sending an access accept message to the terminal device through the second communication network in a case of determining that the authentication of the terminal device is successful.

6. The method according to claim 5, wherein obtaining the multicast broadcast service, MBS, content through the first communication network comprises:
receiving an MBS service announcement through the first communication network, wherein the MBS service announcement comprises at least one MBS session and a first indication parameter corresponding to each MBS session, and the first indication parameter is used to indicate the proxy device to determine whether the MBS content corresponding to the MBS session is supported to be sent in the second communication network;
taking the MBS session as a target MBS session in a case of determining, according to the first indication parameter, that the MBS content corresponding to the MBS session is supported to be sent in the second communication network; and
obtaining the MBS content through the target MBS session.

7. The method according to claim 6, wherein the MBS service announcement further comprises an MBS service type corresponding to each MBS session, and obtaining the MBS content through the target MBS session comprises:
when an MBS service type of the target MBS session is a broadcast type, taking a received session content of the target MBS session as the MBS content; or
when an MBS service type of the target MBS session is a multicast type, j oining the target MBS session through the first communication network, and taking a received session content of the MBS session as the MBS content.

8. The method according to claim 7, wherein joining the target MBS session through the first communication network comprises:
sending a session modification request message through the first communication network, wherein the session modification request message comprises a second indication parameter and an MBS session identifier of the target MBS session, and the second indication parameter is used to indicate that the proxy device provides the MBS content to the terminal device through the second communication network; and
receiving a session modification command through the first communication network, and joining the target MBS session according to the session modification command.

9. The method according to any one of claims 1 to 8, wherein the first communication network is a 3GPP network, and the second communication network is a non-3GPP network.

10. A method for communication, applied to a terminal device, and comprising:
receiving, through a second communication network, a multicast broadcast service, MBS, content sent by a proxy device, wherein the MBS content is obtained by the proxy device through a first communication network, the first communication network is a network that supports an MBS, and the second communication network is a network that does not support the MBS.

11. The method according to claim 10, further comprising:
sending an MBS content request message to the proxy device through the second communication network, wherein the MBS content request message is used to indicate the proxy device to send the MBS content through the second communication network.

12. The method according to claim 10, further comprising:
sending an access request message to the proxy device through the second communication network, wherein the access request message is used to indicate the proxy device to perform authentication on the terminal device; and
receiving, through the second communication network, an access accept message sent by the proxy device, wherein the access accept message is used to indicate that authentication of the terminal device is successful;
wherein receiving, through the second communication network, the multicast broadcast service, MBS, content sent by the proxy device comprises:
receiving the MBS content through the second communication network in a case of determining, according to the access accept message, that the authentication of the terminal device is successful.

13. The method according to any one of claims 10 to 12, wherein the first communication network is a 3GPP network, and the second communication network is a non-3GPP network.

14. A method for communication, applied to a first entity in a first communication network, wherein the first entity is configured to provide a multicast broadcast service, MBS, content for the first communication network, and the method comprises:
sending the MBS content to a proxy device through the first communication network, wherein the MBS content is used to indicate the proxy device to send the MBS content to a terminal device through a second communication network, the first communication network is a network that supports an MBS, and the second communication network is a network that does not support the MBS.

15. The method according to claim 14, further comprising:
establishing an MBS session; and
sending an MBS service announcement through the first communication network, wherein the MBS service announcement comprises at least one MBS session and a first indication parameter corresponding to each MBS session, and the first indication parameter is used to indicate the proxy device to determine whether the MBS content corresponding to the MBS session is supported to be sent in the second communication network.

16. The method according to claim 15, wherein the first communication network further comprises a second entity, and the second entity is configured to provide a network exposure function corresponding to the MBS service, and establishing the MBS session comprises:
sending an MBS session establishment request message to the second entity, wherein the MBS session establishment request message comprises a third indication parameter, and the third indication parameter is used to indicate that the established MBS session is a session that supports sending the MBS content to the second communication network; and
establishing the MBS session in response to receiving an MBS session establishment response message sent by the second entity.

17. The method according to claim 16, further comprising:
sending an MBS session identifier request message to the second entity, wherein the MBS session identifier request message comprises a fourth indication parameter, and the fourth indication parameter is used to indicate that the requested MBS session is a session that supports sending the MBS content to the second communication network; and
obtaining an MBS session identifier in response to receiving an MBS session identifier response message sent by the second entity;
wherein sending the MBS session establishment request message to the second entity comprises:
sending the MBS session establishment request message to the second entity according to the MBS session identifier.

18. A method for communication, applied to a first core network device in a first communication network, and comprising:
sending a multicast broadcast service, MBS, content to a proxy device through the first communication network, wherein the MBS content is used to indicate the proxy device to send the MBS content to a terminal device through a second communication network, the first communication network is a network that supports an MBS, and the second communication network is a network that does not support the MBS.

19. The method according to claim 18, further comprising:
sending an MBS service announcement to the proxy device through the first communication network, wherein the MBS service announcement comprises at least one MBS session and a first indication parameter corresponding to each MBS session, and the first indication parameter is used to indicate the proxy device to determine whether the MBS content corresponding to the MBS session is supported to be sent in the second communication network.

20. A method for communication, applied to a second core network device in a first communication network, and comprising:
receiving, through the first communication network, a session modification request message sent by a proxy device, wherein the session modification request message comprises a second indication parameter and an MBS session identifier of a target MBS session, and the second indication parameter is used to indicate that the proxy device provides an MBS content corresponding to the target MBS session to a terminal device through a second communication network; and
sending a session modification command to the proxy device through the first communication network in a case of determining, according to the second indication parameter and the MBS session identifier, that the target MBS session is a session that supports sending the MBS content to the second communication network, wherein the session modification command is used to indicate the proxy device to join the target MBS session.

21. A system for communication, comprising a terminal device, a proxy device, and a first communication network, wherein,
the first communication network is configured to send a multicast broadcast service, MBS, content to the proxy device;
the proxy device is configured to obtain the MBS content through the first communication network, and send the MBS content to the terminal device through a second communication network; and
the terminal device is configured to receive, through the second communication network, the MBS content sent by the proxy device;
wherein the first communication network is a network that supports an MBS, and the second communication network is a network that does not support the MBS.

22. A system for communication, comprising a terminal device, a proxy device, a third communication network, and a first entity, wherein,
the first entity is configured to send a multicast broadcast service, MBS, content to the proxy device through the third communication network;
the proxy device is configured to obtain the MBS content through the third communication network, and send the MBS content to the terminal device through a second communication network; and
the terminal device is configured to receive, through the second communication network, the MBS content sent by the proxy device;
wherein the third communication network is a network that supports an MBS, and the second communication network is a network that does not support the MBS.

23. An apparatus for communication, applied in a proxy device, and comprising:
a first obtaining module, configured to obtain a multicast broadcast service, MBS, content through a first communication network; and
a first sending module, configured to send the MBS content to a terminal device through a second communication network;
wherein the first communication network is a network that supports an MBS, and the second communication network is a network that does not support the MBS.

24. An apparatus for communication, applied in a terminal device, and comprising:
a second receiving module, configured to receive, through a second communication network, a multicast broadcast service, MBS, content sent by a proxy device, wherein the MBS content is obtained by the proxy device through a first communication network, the first communication network is a network that supports an MBS, and the second communication network is a network that does not support the MBS.

25. An apparatus for communication, applied in a first entity in a first communication network, wherein the first entity is configured to provide a multicast broadcast service, MBS, content for the first communication network, and the apparatus comprises:
a third sending module, configured to send the multicast broadcast service, MBS, content to a proxy device through the first communication network, wherein the MBS content is used to indicate the proxy device to send the MBS content to a terminal device through a second communication network, the first communication network is a network that supports an MBS, and the second communication network is a network that does not support the MBS.

26. An apparatus for communication, applied in a first core network device in a first communication network, and comprising:
a fifth sending module, configured to send a multicast broadcast service, MBS, content to a proxy device through the first communication network, wherein the MBS content is used to indicate the proxy device to send the MBS content to a terminal device through a second communication network, the first communication network is a network that supports an MBS, and the second communication network is a network that does not support the MBS.

27. An apparatus for communication, applied in a second core network device in a first communication network, and comprising:
a sixth receiving module, configured to receive, through the first communication network, a session modification request message sent by a proxy device, wherein the session modification request message comprises a second indication parameter and an MBS session identifier of a target MBS session, and the second indication parameter is used to indicate that the proxy device provides an MBS content corresponding to the target MBS session to a terminal device through a second communication network; and
a sixth sending module, configured to send a session modification command to the proxy device through the first communication network in the case of determining, according to the second indication parameter and the MBS session identifier, that the target MBS session is a session that supports sending the MBS content to the second communication network, wherein the session modification command is used to indicate the proxy device to join the target MBS session.

28. An apparatus for communication, comprising:
a processor; and
a memory, configured to store an instruction executable by the processor;
wherein the processor is configured to perform steps of the method according to any one of claims 1 to 9, or the processor is configured to perform steps of the method according to any one of claims 10 to 13, or the processor is configured to perform steps of the method according to any one of claims 14 to 17, or the processor is configured to perform steps of the method according to any one of claims 18 to 19, or the processor is configured to perform steps of the method according to claim 20.
